(19) Europäisches Patentamt
European Patent Office
Office européen des brevets

(11) **EP 2 826 122 B1**

(12) **EUROPÄISCHE PATENTSCHRIFT**

(45) Veröffentlichungstag und Bekanntmachung des Hinweises auf die Patenterteilung:
**02.03.2016 Patentblatt 2016/09**

(21) Anmeldenummer: **13721930.9**

(22) Anmeldetag: **24.04.2013**

(51) Int Cl.:
***H02J 3/24*** *(2006.01)*

(86) Internationale Anmeldenummer:
**PCT/EP2013/058520**

(87) Internationale Veröffentlichungsnummer:
**WO 2014/000906 (03.01.2014 Gazette 2014/01)**

(54) **VERMEIDUNG EINER ÜBERLASTUNG VON ÜBERTRAGUNGSSTRECKEN INNERHALB EINES ENERGIEVERSORGUNGSNETZES**

AVOIDANCE OF AN OVERLOAD FOR TRANSMISSION LINKS WITHIN A POWER SUPPLY SYSTEM

PRÉVENTION D'UNE SURCHARGE DE LIAISONS DE TRANSMISSION À L'INTÉRIEUR D'UN RÉSEAU D'ALIMENTATION EN ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012211149**

(43) Veröffentlichungstag der Anmeldung:
**21.01.2015 Patentblatt 2015/04**

(73) Patentinhaber: **Siemens Aktiengesellschaft**
**80333 München (DE)**

(72) Erfinder:
• **FALK, Rainer**
**85586 Poing (DE)**
• **FRIES, Steffen**
**85598 Baldham (DE)**

(56) Entgegenhaltungen:
**GB-A- 2 460 504    US-A- 5 521 838**

**Beschreibung**

Die Erfindung betrifft ein Verfahren und eine Vorrichtung zum Vermeiden einer Überlastung von Übertragungsstrecken innerhalb von Energieversorgungsnetzen.

Energieversorgungsnetze zum Verteilen von elektrischer Energie an eine Mehrzahl von Stromverbrauchern, insbesondere in einem Haushalts- oder Fabrikstromnetz, dürfen nicht überlastet werden, da hierdurch Schäden an den Übertragungsstrecken und/oder Stromverbrauchern auftreten, wie beispielsweise Zerstörung durch Brand.

Bei Anschluss mehrerer Geräte mit einem hohen Einschaltstrom (z.B. mehrere Server in einem Rechenzentrum) ist aus dem Stand der Technik bekannt, nach einer Stromunterbrechung die einzelnen elektrischen Verbraucher zeitversetzt wieder mit Strom zu versorgen.

Bei Hochspannungsleitungen ist bekannt, die Temperatur der Stromleitungen zu messen und davon abhängig eine maximale Stromstärke zu übertragen. Dadurch können bei günstigen Temperaturverhältnissen Stromleitungen stärker belastet werden als bei einer Auslegung für den ungünstigsten Fall.

Aus dem Stand der Technik ist ferner bekannt, Datenmodelle für elektrische Stromverbraucher bzw. Stromsteuergeräte zu beschreiben (CIM - Common Information Model, IEC - International Electrotechnical Commision 61960).

Ebenfalls bekannt ist die SCL (Substation Configuration Description Language, IEC 61850-6). Mit dieser können z.B. Schutzgeräte in einer Substation ("Trafohäuschen") konfiguriert werden und erhalten damit auch die notwendige Information zur erlaubten Last auf Leitungen.

Die Kontrolle eines Datendurchsatzes für Kommunikationsnetze ist aus dem Bereich der Telekommunikation bekannt.

Bei Überschreitung eines Grenzwertes einer maximal übertragbaren Leistung auf Streckenabschnitten innerhalb von Energieversorgungsnetzen lösen meist Sicherungen aus und unterbrechen die Stromversorgung für das gesamte Netz. Auch bekannt sind elektrische Anschalt-Steckdosen, beispielsweise für den Anschluss einer Waschmaschine und eines Trockners an einer einzelnen Stromsteckdose. Um eine Überlastung zu verhindern, wird der Trockner für einige Minuten stromlos geschaltet, wenn der Stromfluss zur Waschmaschine eine Schwelle überschreitet (z.B. beim Heizen). Dadurch werden eine Überlastung der Steckdose und ein Auslösen der Sicherung verhindert.

Daher besteht die Aufgabe der vorliegenden Erfindung darin, ein Verfahren und eine Vorrichtung bereitzustellen, die eine Überlastung eines Energieversorgungsnetzes in einfacher Weise verhindern.

Diese Aufgabe wird durch ein Verfahren und eine Vorrichtung gemäß den in den unabhängigen Ansprüchen angegebenen Merkmalen gelöst. Vorteilhafte Ausgestaltungen sind in den Unteransprüchen angegeben.

Erfindungsgemäß weist ein Verfahren zur Vermeidung von Überlastung eines Streckenabschnittes oder mehrerer Streckenabschnitte zur Übertragung von elektrischer Leistung an Verbraucher innerhalb eines Energieversorgungsnetzes folgende Schritte auf: Zunächst werden angeforderte Leistungswerte elektrischer Leistung, die von Verbrauchern angefordert wurden, ermittelt. Für mindestens einen Streckenabschnitt wird ein maximal verfügbarer Leistungswert elektrischer Leistung ermittelt. Falls ein angeforderter Leistungswert für einen Streckenabschnitt kleiner oder gleich dem maximal verfügbaren Leistungswert ist, folgt die Freigabe des Streckenabschnittes.

So wird gewährleistet, dass ein Streckenabschnitt eines Energieversorgungsnetzes nicht überlastet wird und gleichzeitig ein Verbraucher Leistung beziehen kann, wenn damit keine Überlastung des Netzes ausgelöst wird.

Als Streckenabschnitte werden hier Teilstrecken des Übertragungsnetzes bezeichnet, die beispielsweise durch unterschiedliche starke maximale Auslastung gekennzeichnet sind oder durch unterschiedliche Anzahl an Verbrauchern, die die Streckenabschnitte nutzen. Ferner können innerhalb des Netzes parallele Abschnitte vorhanden sein, die alternativ genutzt werden können.

Gemäß einer vorteilhaften Ausgestaltung wird der angeforderte Leistungswert als elektrische Leistung oder Stromstärke oder Strommenge angefordert. Die Angabe als elektrische Leistung erleichtert die Ermittlung des maximal verfügbaren Leistungswertes, da die Auslastung eines Streckenabschnittes durch die elektrische Leistung, also die elektrische Energie pro Zeiteinheit bestimmt ist und somit keine weitere Umrechnung nötig ist. Bei bekannter Spannung eines Verbrauchers, dies kann insbesondere ein Haushaltsgerät sein, ist die Angabe des angeforderten Leistungswertes als Einheit Strom ausreichend. Ferner arbeiten am Markt verfügbare Geräte zur Realisierung der Erfindung auf Basis von Strom oder Leistung, so dass eine kostengünstige Realisierung der Erfindung möglich ist.

In einer weiteren Ausgestaltung des Verfahrens wird der angeforderte Leistungswert als ein Leistungsprofil ausgebildet, das über die Zeit veränderliche Leistungswerte anfordert. So wird insbesondere vorteilhaft die Berücksichtigung von Verbrauchern optimiert, die zeitlich sehr variabel überhaupt Energie benötigen oder zeitlich schwankende Leistungswerte benötigen. Für Perioden, in denen beispielsweise ein Verbraucher keine Energie benötigt, wird für die Ermittlung des maximal verfügbaren Leistungswertes auf einem Streckenabschnitt die Anforderung des Verbrauchers entsprechend berücksichtigt, indem kein Leistungswert für ihn reserviert wird. Hiermit kann eine Auslastung eines Streckenabschnittes erhöht werden.

Gemäß einer vorteilhaften Ausgestaltung wird der angeforderte Leistungswert durch eine Regelungseinheit ermittelt. Eine separat ausgebildete Regelungseinheit bietet insbesondere den Vorteil, dass das Verfahren in bereits bestehenden Energieversorgungsnetzen auf einfache Weise umgesetzt werden kann.

Gemäß einer weiteren vorteilhaften Ausgestaltung erfolgt eine Authentifizierung des mindestens einen Verbrauchers durch die Regelungseinheit, um sicherzustellen, dass nur zur Stromentnahme berechtigte Verbraucher bei der Ermittlung des maximal verfügbaren Leistungswertes berücksichtigt werden.

Gemäß einer weiteren vorteilhaften Ausgestaltung werden mindestens zwei Streckenabschnitte für mindestens zwei Verbraucher benutzt. So kann beispielsweise mittels alternativer Streckenabschnitte eine optimale Ausnutzung des Energieversorgungsnetzes gewährleistet werden.

Gemäß einer weiteren vorteilhaften Ausgestaltung wird zur Ermittlung des maximal verfügbaren Leistungswertes je Streckenabschnitt der mindestens eine angeforderte Leistungswert von einem vorgebbaren Leistungswert des Streckenabschnittes subtrahiert. Ein vorgebbarer Leistungswert kann beispielsweise der Wert sein, der die maximal mögliche Auslastung des Streckenabschnittes darstellt oder einen niedrigeren Wert, um beispielsweise einen Pufferbereich dauerhaft von der Freigabe an Verbraucher auszuschließen.

So wird auf einfache Weise der maximal verfügbare Leistungswert je Streckenabschnitt ermittelt.

Gemäß einer weiteren vorteilhaften Ausgestaltung wird das Freigeben verhindert, falls der angeforderte Leistungswert des mindestens einen Verbrauchers den maximal verfügbaren Leistungswert übersteigt.

So wird verhindert, dass ein Verbraucher, der zu einer Überlastung des Stromnetzes führen würde, wenn er den beispielsweise angeforderten Strom beziehen würde, den Streckenabschnitt nutzen kann. Dies ist von Vorteil für die anderen Verbraucher, die durch die verhinderte Freigabe nicht von Folgen eines Stromausfalles betroffen sind, und für den Verbraucher, für den keine Freigabe erstellt wird, ebenfalls nicht von Nachteil, da er von einem Stromausfall ohnehin auch betroffen wäre.

In einer weiteren Ausgestaltung erfolgt das Freigeben des Streckenabschnittes für einen Verbraucher dadurch, dass eine Berechtigung ausgestellt wird, die als Berechtigungstoken codiert ist. Dabei handelt es sich beispielsweise um Security Assertions Markup Language (kurz: SAML)-Token, die auf Basis von Extensible Markup Language (kurz: XML)-Datenstrukturen für den Verbraucher eine Möglichkeit darstellen, sich zu authentisieren, zum Beispiel mit Hilfe kryptographischen Schlüsselmaterials. Dies ermöglicht eine hohe Sicherheit bei der Überprüfung der Anforderungen. Ferner ist eine Authentisierung des Verbrauchers, beispielsweise in Form eines Gerätes, durch ein Zertifikat von Vorteil, beispielsweise, wenn das Berechtigungstoken als ein Attributzertifikat ausgeführt ist, das an ein Gerätezertifikat gebunden ist. Somit ist es möglich, eine Berechtigung allein aufgrund einer Authentifizierung des anfordernden Gerätes auszustellen. Darüber hinaus ist es möglich über ein Attributzertifikat ein zeitlich anders eingeschränktes Berechtigungstoken zu vergeben als das Gerätezertifikat. Dies ermöglicht es beispielsweise, einen nur kurzzeitigen Mehrverbrauch zu autorisieren.

Eine Ausgestaltung des Verfahrens, bei welchem das Freigeben für eine vorgebbare Zeitspanne geschieht, hat insbesondere den Vorteil, dass einem Verbraucher eine Berechtigung für einen beliebig großen Zeitraum, zum Beispiel über mehrere Monate, ausgestellt werden kann. Gleichzeitig kann aber auch das Blockieren eines Verbrauchers kontrolliert werden und beispielsweise eine Freigabe standardmäßig für eine begrenzte Zeitspanne, zum Beispiel wenige Stunden, erfolgen.

Gemäß einer weiteren Ausgestaltung wird ein Wert einer tatsächlich vom Verbraucher bezogenen elektrischen Leistung ermittelt. Diese Kontrolle garantiert, dass der Verbraucher keinen größeren Wert als den ihm freigegebenen Leistungswert bezieht. Der Verbraucher erhält einen Hinweis, falls der Wert den ihm freigegebenen Wert überschreitet. Das Energieversorgungsnetz kann hierfür einen Puffer zurückhalten, der nicht über Anforderungen freigegeben wird, sondern für Überschreitungen des freigegebenen Wertes reserviert ist.

So besteht einerseits für den freigegebenen Leistungswert überschreitenden Verbraucher die Möglichkeit, den Wert der von ihm bezogenen elektrischen Leistung anzupassen. Andererseits bleiben ungewollte Folgen seiner Überschreitung - wie das Auslösen einer Sicherung durch die Überlastung des Energienetzes - aus.

In einer vorteilhaften Ausgestaltung erfolgt der Hinweis in der Form, dass der Verbraucher vom Energieversorgungsnetz NET abgetrennt wird. Der Verbraucher fordert in diesem Fall wieder von neuem einen Leistungswert an, und es werden gegebenenfalls erneut ein oder mehrere Streckenabschnitte freigegeben. So wird ein Überschreiten des freigegebenen Leistungswertes verhindert und die übrigen Verbraucher des Energienetzes sind von möglichen Folgen wie dem Auslösen einer Sicherung nicht betroffen.

Gemäß einem weiteren Aspekt der Erfindung wird eine Vorrichtung geschaffen zur Vermeidung von Überlastung mindestens eines Streckenabschnittes, wobei der mindestens eine Streckenabschnitt zur Übertragung von elektrischer Leistung innerhalb eines Energieversorgungsnetzes für mindestens einen Verbraucher ausgestaltet ist, umfassend eine erste Einheit zum Ermitteln eines angeforderten Leistungswertes elektrischer Leistung des mindestens einen Verbrauchers, eine zweite Einheit zum Ermitteln eines maximal verfügbaren Leistungswertes elektrischer Leistung für den mindestens einen Streckenabschnitt und eine dritte Einheit zum Freigeben des mindestens einen Streckenabschnittes an den mindestens einen Verbraucher zum Übertragen des angeforderten Leistungswertes, falls der angeforderte Leistungswert den maximal verfügbaren Leistungswert nicht übersteigt.

In einer vorteilhaften Ausgestaltung handelt es sich bei der dritten Einheit M3 um einen Berechtigungsserver, der ein Berechtigungstoken oder ein Protokoll verteilt, welches die Berechtigungsinformationen enthält.

Die Erfindung wird nachfolgend mit einem Ausführungsbeispiel anhand der Figuren näher erläutert. Es zeigen:

Figur 1     eine schematische Darstellung eines Energieversorgungsnetzes gemäß einem Ausführungsbeispiel der Erfindung;

Figur 2     eine schematische Darstellung eines Energieversorgungsnetzes gemäß einem weiteren Ausführungsbeispiel der Erfindung;

Figur 3     eine schematische Darstellung einer Datenstruktur zur Ausstellung von Zertifikaten gemäß einem weiteren Ausführungsbeispiel der Erfindung.

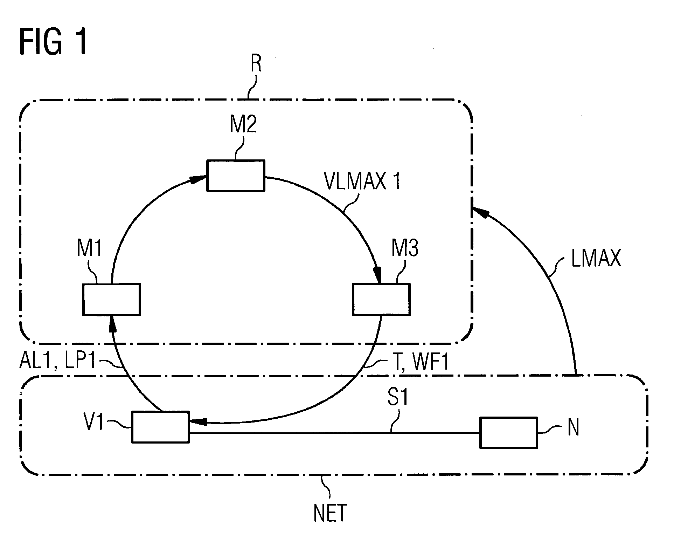

Figur 1 zeigt in einem ersten Beispiel der Erfindung ein Energieversorgungsnetz NET mit einer Netzstation N, einem Verbraucher V1 und einem Streckenabschnitt S1. Die Netzstation ist ein Dieselgenerator, der 400 V (V - Volt) Gleichstrom über den Streckenabschnitt schickt, wobei der Streckenabschnitt bei 400 V einen Strom von maximal 50 A (A - Ampere) übertragen kann, und der Verbraucher eine Batterie eines Elektrofahrzeugs ist, die aufgeladen werden soll.

Im ersten Schritt wird mit Hilfe einer ersten Einheit M1 ein angeforderter Leistungswert AL1 elektrischer Leistung des Verbrauchers ermittelt. Der angeforderte Leistungswert AL1 ist als Leistungsprofil LP1 ausgestaltet, wobei das Leistungsprofil folgende Anforderung über der Zeit stellt:

| Zeitraum | angeforderter Leistungswert als maximaler angeforderter Strom in Ampere A bei 100 V Gleichstrom |
|---|---|
| 0 - 60 min | 100 A |
| 60 - 120 min | 80 A |
| 120 - 360 min | 40 A |

In einem zweiten Schritt wird mit Hilfe einer zweiten Einheit M2 ein maximal verfügbarer Leistungswert VLMAX1 elektrischer Leistung des Streckenabschnitts ermittelt.

In dem ersten Beispiel wird lediglich ein einziger Verbraucher betrachtet, so dass lediglich der Verbraucher bei der Ermittlung berücksichtigt werden muss. Der maximal verfügbare Leistungswert kann folgendermaßen berechnet werden:

$$\texttt{VLMAX1 = 400 V * 50 A = 20 kW}$$

Das Elektrofahrzeug fordert mittels des angeforderten Leistungswertes maximal

$$\texttt{AL1 = 100 V * 100 A = 10 kW}$$

Mittels einer dritten Einheit M3 wird im dritten Schritt der Streckenabschnitt an einen Verbraucher freigegeben zum Übertragen eines freigegebenen Wertes WF1, welcher dem angeforderten Leistungswert entspricht, falls der angeforderte Leistungswert kleiner oder gleich dem maximal verfügbaren Leistungswert ist. In diesem Beispiel ist der angeforderte Leistungswert AL1 kleiner als der maximal verfügbare Leistungswert des Streckenanschnitts VLMAX1, d. h. VLMAX1 > AL1. Somit ist der freigegeben Wert WF1 = AL1 = 10 kW. Das bedeutet, dass das Elektrofahrzeug eine Leistung von 10 kW konsumieren kann.

Um den Streckenabschnitt möglichst effizient auslasten zu können, erhält das Elektrofahrzeug den freigegebenen Wert WF1 = 10 kW nur für 60 min, wie im Leistungsprofil angefordert. Danach reduziert sich der freigegebene Wert WF1 zu WF1 = 100 V * 80 A = 8 kW für die folgenden 60 min. Schließlich reduziert sich der Wert weiter auf WF1 = 100 V * 40 A = 4 kW für den Zeitraum 120 min bis 360 min. Nach den 360 min erlischt die Freigabe vollständig. Falls das Elektrofahrzeug dann weiterhin elektrische Leistung benötigt, muss es erneut den angeforderten Leistungswert an die erste Einheit mitteilen.

Die Erfindung wurde im ersten Beispiel anhand von Gleichstrom dargestellt. Selbstverständlich können Leistungsangaben auch für Wechselstrom oder eine Kombination aus Gleich- und Wechselstrom angegeben werden. Zudem können Anpassungen von Spannungswerten und Frequenzen beliebig durchgeführt werden, z.B. wie in dem ersten Beispiel eine Transformation von 400 V auf 100 V Gleichstrom.

Die Freigabe kann beispielsweise innerhalb eines Haushaltsnetzes durch ein Haushaltssteuergerät (Energy-Gateway) realisiert werden, das die Berechtigungen den einzelnen Verbrauchern, d.h. Geräten des Haushaltsnetzes, zuweist. Ein Energy-Gateway kann dann beispielsweise Lasten abschalten, wenn ein Gerät einen Leistungswert konsumiert, der den freigegebenen Wert übersteigt.

Mobile Geräte, die nicht dauerhaft am Haushaltsnetz angeschlossen sind, können ein Berechtigungstoken T über einen Berechtigungsserver erhalten und ihre Berechtigungsinformationen über eine Kommunikationsverbindung (beispielsweise eine LAN-Verbindung oder eine WLAN-Verbindung) an das Energy-Gateway übertragen, so dass das Energy-Gateway dynamisch auf Veränderungen in der Verteilung der Berechtigungen reagieren kann.

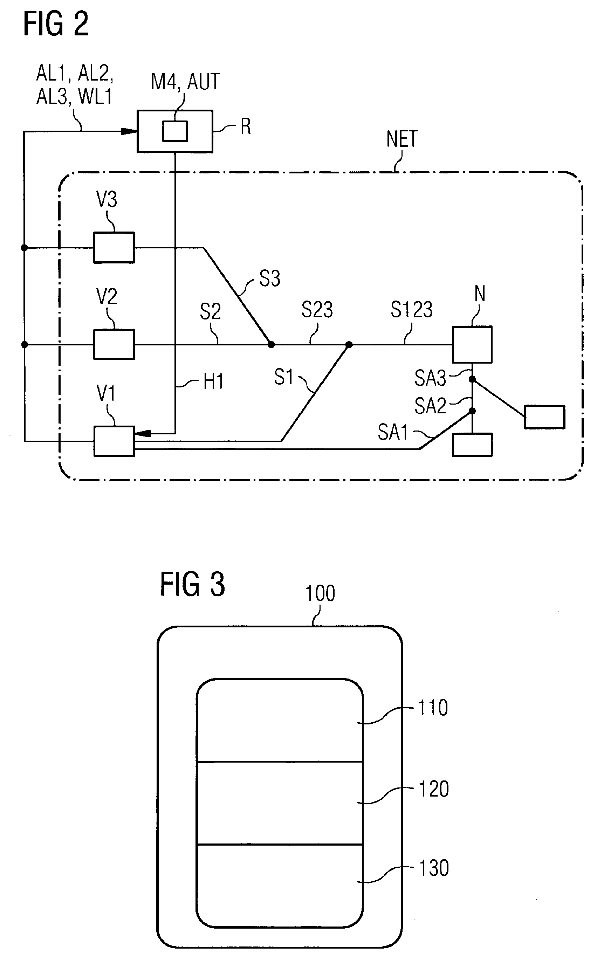

Anhand von Figur 1 und 2 wird im Folgenden ein Ausführungsbeispiel im Umfeld eines Fabrikstromnetzes vorgestellt. Gezeigt sind ein erster Verbraucher V1, ein zweiter Verbraucher V2 und ein dritter Verbraucher V3, die einen ersten Streckenabschnitt S1, einen zweiten Streckenabschnitt S2, einen dritten Streckenabschnitt S3, einen vierten Streckenabschnitt S23, und einen fünften Streckenabschnitt S123 eines Energieversorgungsnetzes NET benutzen. Dabei benutzt beispielsweise der erste Verbraucher den ersten Streckenabschnitt alleine, genauso wie der zweite Verbraucher den zweiten Streckenabschnitt und der dritte Verbraucher den dritten Streckenabschnitt allein nutzen. Der vierte Streckenabschnitt wird vom zweiten Verbraucher und dritten Verbraucher gemeinsam genutzt, sowie der fünfte Streckenabschnitt gemeinsam vom ersten Verbraucher, zweiten Verbraucher und dritten Verbraucher.

Zur Ermittlung eines maximal verfügbaren Leistungswertes VLMAX1 für den ersten Verbraucher auf dem ersten Streckenabschnitt S1 und dem fünften Streckenabschnitt S123 werden nun ein auf dem ersten Streckenabschnitt S1 und auf dem fünften Streckenabschnitt S123 vom zweiten Verbraucher zweiter angeforderter Leistungswert AL2 und vom dritten Verbraucher dritter angeforderter Leistungswert AL3 von einem vorgegebenen Leistungswert LMAX subtrahiert.

Eine Regelungseinheit R ist als Hardware mit darauf abgestimmter Software realisiert. Die Regelungseinheit kennt den vorgegebenen Leistungswert, der in diesem Beispiel fest und für alle Leitungen identisch ist und die maximal mögliche Belastung der Leitungen, die zur Stromübertragung verwendet werden, darstellt.

Eine erste Einheit M1 ist eine Software-Komponente der Regelungseinheit, um angeforderte Leistungswerte zu empfangen. Das Empfangen geschieht über drahtlose oder drahtgebundene Netzwerkverbindungen innerhalb des Energieversorgungsnetzes NET.

Dieser durch die erste Einheit realisierte Schritt ist als Programm-Code auf einem Speichermedium der Regelungseinheit abgelegt, wobei Anweisungen des Programm-Codes von mindestens einer Recheneinheit auf der Regelungseinheit verarbeitet werden.

Für den ersten Streckenabschnitt wird weder vom zweiten noch vom dritten Verbraucher ein zweiter oder dritter Leistungswert angefordert: In diesem Fall wird der erste Streckenabschnitt für den ersten Verbraucher freigegeben, falls der erste angeforderte Leistungswert kleiner oder gleich dem vorgegebenen Leistungswert ist.

Für den fünften Streckenabschnitt werden vom vorgegebenen Leistungswert die vom zweiten und dritten Verbraucher zweiten und dritten angeforderten Leistungswerte subtrahiert. Ist der verbleibende Wert größer oder gleich dem vom ersten Verbraucher angeforderten Wert, wird der fünfte Streckenabschnitt für den ersten Verbraucher freigegeben.

Für die Ermittlung des maximal verfügbaren Leistungswertes wie hier beschrieben ist eine zweite Einheit M2 verantwortlich, die wie die erste Einheit die Anweisungen eines Programm-Codes ausführt, also im Wesentlichen die Subtraktion der Leistungswerte.

Eine Leistung kann ein Verbraucher beziehen, wenn alle Streckenabschnitte, die er zur Beziehung der Leistung benötigt, freigegeben sind. Dabei kann es sich auch um eine Strecke innerhalb des Netzes handeln, die nicht der kürzesten oder naheliegendsten Strecke - dies wäre etwa die mit den wenigsten Knoten, d.h. Streckenabschnitten - entspricht. Falls alternative Streckenabschnitte für einen Verbraucher existieren, wertet die Regelungseinheit zunächst den Fall der kürzesten Strecke aus und wertet dann, wenn für die kürzeste Strecke bereits ein angeforderter Leistungswert nicht freigegeben wurde, alternative Steckenabschnitte aus. Im in Figur 2 gezeigten Fall kann der Verbraucher so eine Freigabe für einen ersten alternativen Steckenabschnitt SA1, einen zweiten alternativen Steckenabschnitt SA2 und einen dritten alternativen Steckenabschnitt SA3 erhalten, falls der erste und fünfte Streckenabschnitt nicht freigegeben wurden.

Der zweite Verbraucher fordert im hier beschriebenen Beispiel einen Leistungswert in Form eines Leistungsprofils mit über die Zeit veränderlichen Leistungswerten an. Es erfolgt die Ermittlung des maximal verfügbaren Leistungswertes je einzelnen Zeiteinheiten, die durch die Zeiteinheiten des Leistungsprofils vorgegeben sind. So kann berücksichtigt werden, dass der zweite Verbraucher in regelmäßigen Abständen Energie benötigt. Gerade in einer Automatisierungsanlage ist die Anforderung von Verbrauchern in Form von Geräten wie Robotern entsprechend bestimmten Prozessabläufen, die den Einsatz des Roboters regeln, vorgegeben. So werden während der Perioden, in denen Geräte keine Energie benötigen, die entsprechenden Streckenabschnitte nicht unnötig belegt, wobei gleichzeitig die Energieversorgung eines Gerätes für einen Zeitpunkt in der Zukunft sichergestellt ist. Gerade bei sicherheitsrelevanten Prozessschritten, für die ein Gerät zuverlässig Leistung beziehen können muss, ist dies vorteilhaft.

Die Regelungseinheit ermittelt außerdem die günstigste Variante bei mehreren alternativen Streckenabschnitten für einen Verbraucher, um möglichst viele Verbraucher mit Energie versorgen zu können:

Wenn der Regelungseinheit ein angeforderter Leistungswert vom zweiten Verbraucher für eine Zeiteinheit in der Zukunft vorliegt, kann die Regelungseinheit dies bei der Ermittlung des maximal verfügbaren Leistungswertes für den ersten Verbraucher, der für eine zeitlich frühere Zeiteinheit einen Leistungswert anfordert, berücksichtigen und für den ersten Verbraucher eine Strecke freigeben, so dass gleichzeitig auch die Energieversorgung des zweiten Verbrauchers sichergestellt ist. Dies kann zum Beispiel dadurch erreicht werden, dass für den ersten Verbraucher die drei alternativen Streckenabschnitte freigegeben werden, die nicht benötigt werden, um die Energieversorgung des zweiten Verbrauchers sicherzustellen.

Die Regelungseinheit umfasst außerdem eine dritte Einheit M3 u.a. zur Authentifikation (AUT) von Verbrauchern. Nach erfolgreicher Authentifikation erhält ein Verbraucher ein Identitätszertifikat.
Im Falle einer Freigabe stellt die dritte Einheit außerdem die Berechtigung aus. Dies geschieht im Ausführungsbeispiel durch eine Erweiterung des Identitätszertifikats um ein Berechtigungszertifikat.

Die dritte Einheit dient als Zertifizierungsstelle und verarbeitet daher Datenstrukturen sowie Programm-Codes, um die Authentifikation durchzuführen und die Zertifikate entsprechend der angeforderten Leistungsprofile auszustellen.

Figur 3 zeigt dazu eine Datenstruktur 100, die den Aufbau eines Zertifikats, bestehend aus einem allgemeinen Definitionsbereich 110, einem Identitätsbereich 120 und einem Berechtigungsbereich 130 beschreibt. Derartige Zertifikate sind durch den Standard X.509 (Request for Comment (RFC) 5280) bekannt.

Der allgemeine Definitionsbereich 110 legt generelle Daten des Zertifikates fest. Dies sind unter anderem eine Seriennummer des Zertifikats und ein Herausgeber des Zertifikats zur Kennzeichnung der Herkunft des Zertifikats, sowie die Gültigkeit des Zertifikates.

Die Datenstruktur enthält ferner einen Identitätsbereich 120, der Daten bezüglich einer spezifischen Identität, für die das Zertifikat ausgestellt wurde, definiert. Hier kann ein Name eines Inhabers des Identitätszertifikats zur eindeutigen Zuordnung von Zertifikaten zu Verbrauchern definiert werden.

Im Falle einer Freigabe einer Strecke enthält die Datenstruktur zusätzlich einen Berechtigungsbereich 130, der Informationen über einen freigegebenen Wert WF1, die freigegebenen Streckenabschnitte, die Dauer, für die die Freigabe erfolgt, und eine Priorität, mit der ein Verbraucher gewichtet ist, enthält. Die Priorität regelt im Falle zweier vorliegender Berechtigungszertifikate die Reihenfolge der Freigabe von Streckenabschnitten an Verbraucher, wobei bei der Ermittlung des maximal verfügbaren Leistungswertes zunächst ein Verbraucher mit dem Zertifikat, das die höhere Priorität aufweist, berücksichtigt wird.
Hier sind im Falle einer Freigabe die Informationen hinterlegt, wie sie ein Verbraucher in einer Anforderung gesendet hat.

Der Berechtigungsbereich kann alternativ auch ein separates Zertifikat (Attributzertifikat) sein, das einem Identitätszertifikat zugeordnet ist.

Nach Vorlage dieser Datenstruktur durch einen Verbraucher bei einer Netzstation N erfolgt die Freigabe von Streckenabschnitten und ein Verbraucher kann Energie über die freigegebenen Streckenabschnitte beziehen.

Zusätzlich ermittelt die Regelungseinheit einen Wert WL1 der vom ersten Verbraucher tatsächlich bezogenen Leistung. Dieser Wert wird mit dem freigegebenen und im Zertifikat festgelegten Wert verglichen. So kann im Szenario des Fabriknetzes erkannt werden, dass ein Verbraucher mehr Leistung bezieht, als ihm freigegeben wurde, und ein Hinweis H1 an den ersten Verbraucher übermittelt werden. So kann der Verbraucher den Wert der von ihm bezogenen Leistung nachregeln. Gerade in Fabriknetzen, wo davon ausgegangen werden kann, dass eine Überschreitung unbeabsichtigt geschieht, wird so verhindert, dass ein Gerät von der Stromversorgung abgetrennt wird und eventuell ein Prozessschritt nicht ausgeführt werden kann.

Die Regelungseinheit R sowie die erste Einheit M1, zweite Einheit M2 und dritte Einheit M3 können in Software, Hardware oder in einer Kombination aus Soft- und Hardware realisiert und ausgeführt werden.

So können die durch die genannten Einheiten der Vorrichtung realisierten Schritte als Programm-Code auf einem Speichermedium, insbesondere einer Festplatte, CD-ROM oder einem Speichermodul abgelegt sein, wobei die einzelnen Anweisungen des Programm-Codes von mindestens einer Recheneinheit, umfassend einen Prozessor, ausgelesen und verarbeitet werden. Der Prozessor ist mit dem Speichermedium über einen Bus zum Datenaustausch verbunden.

Ferner kann eine Ein-Ausgabe-Einheit über den Bus angeschlossen werden, wobei mittels der Ein-Ausgabe-Einheit Daten empfangen und/oder versendet werden können.
Ferner können die Einheiten auch verteilt über mehrere Recheneinheiten implementiert und ausgeführt werden.

## Patentansprüche

1. Verfahren zur Vermeidung von Überlastung mindestens eines Streckenabschnittes (S1), wobei der mindestens eine Streckenabschnitt (S1) zur Übertragung von elektrischer Leistung innerhalb eines Energieversorgungsnetzes (NET) für mindestens einen Verbraucher (V1) ausgestaltet ist, bei dem folgende Schritte ausgeführt werden:

- Ermitteln eines angeforderten Leistungswertes (AL1) elektrischer Leistung des mindestens einen Verbrauchers (V1);
- Ermitteln eines maximal verfügbaren Leistungswertes (VLMAX1) elektrischer Leistung für den mindestens einen Streckenabschnitt (S1);
- Freigeben des mindestens einen Streckenabschnittes (S1) an den mindestens einen Verbraucher (V1) zum Übertragen eines freigegebenen Wertes (WF1), welcher dem angeforderten Leistungswert (AL1) entspricht, falls der angeforderte Leistungswert (AL1) kleiner oder gleich dem maximal verfügbaren Leistungswert (VLMAX1) ist.

2. Verfahren nach Anspruch 1, wobei der angeforderte Leistungswert (AL1) als elektrische Leistung oder Stromstärke oder Strommenge angefordert wird.

3. Verfahren nach Anspruch 1 oder 2, wobei der angeforderte Leistungswert (AL1) als ein Leistungsprofil (LP1) ausgebildet wird, das über die Zeit veränderliche Leistungswerte anfordert.

4. Verfahren nach einem der vorstehenden Ansprüche, wobei der angeforderte Leistungswert (AL1) durch eine Regelungseinheit (R) ermittelt wird.

5. Verfahren nach Anspruch 4, wobei zum Ermitteln des angeforderten Leistungswertes (AL1) eine Authentifizierung (AUT) des mindestens einen Verbrauchers (V1) durch die Regelungseinheit (R) durchgeführt wird.

6. Verfahren nach einem der vorstehenden Ansprüche, wobei mindestens zwei Streckenabschnitte (S1, S2) für mindestens zwei Verbraucher (V1, V2) benutzt werden.

7. Verfahren nach Anspruch 6, wobei zur Ermittlung des maximal verfügbaren Leistungswertes (VLMAX1) je Streckenabschnitt (S1, S2) der mindestens eine angeforderte Leistungswert (AL1) von einem vorgebbaren Leistungswert (LMAX) des Streckenabschnittes (S1, S2) subtrahiert wird.

8. Verfahren nach einem der vorstehenden Ansprüche, wobei das Freigeben verhindert wird, falls der angeforderte Leistungswert (AL1) des mindestens einen Verbrauchers (V1) den maximal verfügbaren Leistungswert (VLMAX1) übersteigt.

9. Verfahren nach einem der vorstehenden Ansprüche, wobei das Freigeben derart durchgeführt wird, dass eine Berechtigung ausgestellt wird, die als Berechtigungstoken (T), insbesondere als ein Zertifikat, codiert ist.

10. Verfahren nach einem der vorstehenden Ansprüche, wobei das Freigeben für eine vorgebbare Zeitspanne durchgeführt wird.

11. Verfahren nach einem der vorstehenden Ansprüche, wobei ein Wert (WL1) einer bezogenen elektrischen Leistung des mindestens einen Verbrauchers (V1) ermittelt wird und der mindestens eine Verbraucher einen Hinweis (H1) erhält, falls der Wert (WL1) den ihm freigegebenen Wert (WF1) übertrifft.

12. Verfahren nach Anspruch 11, wobei der Hinweis (H1) in Form einer Abtrennung des mindestens einen Verbrauchers vom Energieversorgungsnetz (NET) erfolgt.

13. Regelungseinheit (R) zur Vermeidung von Überlastung mindestens eines Streckenabschnittes (S1), wobei der mindestens eine Streckenabschnitt (S2) zur Übertragung von elektrischer Leistung innerhalb eines Energieversorgungsnetzes (NET) für mindestens einen Verbraucher (V1) ausgestaltet ist, umfassend:

- Erste Einheit (M1) zum Ermitteln eines angeforderten Leistungswertes (AL1) elektrischer Leistung des mindestens einen Verbrauchers (V1);
- Zweite Einheit (M2) zum Ermitteln eines maximal verfügbaren Leistungswertes (VLMAX1) elektrischer Leistung für den mindestens einen Streckenabschnitt (S1);
- Dritte Einheit (M3) zum Freigeben des mindestens einen Streckenabschnittes (S1) an den mindestens einen Verbraucher (V1) zum Übertragen des angeforderten Leistungswertes (AL1), falls der angeforderte Leistungswert (AL1) den maximal verfügbaren Leistungswert (VLMAX1) nicht übersteigt.

14. Regelungseinheit (R) nach Anspruch 13, wobei die Regelungseinheit (R) ferner mindestens eine vierte Einheit (M4) aufweist zur Verwendung in einem der Verfahrensschritte gemäß den Ansprüchen 2 bis 12.

**Claims**

1. Method for avoiding overloading at least one link section (S1), wherein the at least one link section (S1) is configured to transmit electrical power within a power supply system (NET) for at least one load (V1), in which the following steps are carried out:

   - determining a requested power value (AL1) of electrical power of the at least one load (V1);
   - determining a maximum available power value (VLMAX1) of electrical power for the at least one link section (S1);
   - releasing the at least one link section (S1) to the at least one load (V1) for the transmission of a released value (WF1) which corresponds to the requested power value (AL1) if the requested power value (AL1) is less than or equal to the maximum available power value (VLMAX1).

2. Method according to Claim 1, wherein the requested power value (AL1) is requested as electrical power or strength of current or quantity of current.

3. Method according to Claim 1 or 2, wherein the requested power value (AL1) is embodied as a power profile (LP1) which requests power values which are variable over time.

4. Method according to one of the preceding claims, wherein the requested power value (AL1) is determined by means of a regulating unit (R).

5. Method according to Claim 4, wherein in order to determine the requested power value (AL1), the at least one load (V1) is authenticated (AUT) by means of the regulating unit (R).

6. Method according to one of the preceding claims, wherein at least two link sections (S1, S2) are used for at least two loads (V1, V2).

7. Method according to Claim 6, wherein in order to determine the maximum available power value (VLMAX1) per link section (S1, S2), the at least one requested power value (AL1) is subtracted from a predefinable power value (LMAX) of the link section (S1, S2).

8. Method according to one of the preceding claims, wherein the release is prevented if the requested power value (AL1) of the at least one load (V1) exceeds the maximum available power value (VLMAX1).

9. Method according to one of the preceding claims, wherein the release is carried out such that authorization, which is encoded as an authorization token (T), in particular as a certificate, is issued.

10. Method according to one of the preceding claims, wherein the release is carried out for a predefinable time period.

11. Method according to one of the preceding claims, wherein a value (WL1) of a drawn electrical power of the at least one load (V1) is determined, and the at least one load receives a message (H1) if the value (WL1) exceeds the value (WF1) released for it.

12. Method according to Claim 11, wherein the message (H1) is displayed in the form of disconnection of the at least one load from the power supply system (NET).

13. Regulating unit (R) for avoiding overloading at least one link section (S1), wherein the at least one link section (S2) is configured to transmit electrical power within a power supply system (NET) for at least one load (V1), comprising:

   - a first unit (M1) for determining a requested power value (AL1) of electrical power of the at least one load (V1);
   - a second unit (M2) for determining a maximum available power value (VLMAX1) of electrical power for the at least one link section (S1);
   - a third unit (M3) for releasing the at least one link section (S1) to the at least one load (V1) for the transmission of the requested power value (AL1) if the requested power value (AL1) does not exceed the maximum available power value (VLMAX1).

**14.** Regulating unit (R) according to Claim 13, wherein the regulating unit (R) also has at least one fourth unit (M4) for use in one of the method steps according to Claims 2 to 12.

**Revendications**

**1.** Procédé de prévention d'une surcharge d'au moins un tronçon (S1), l'au moins un tronçon (S1) étant conçu pour transporter une puissance électrique dans un réseau d'alimentation en énergie (NET) pour au moins un consommateur (V1), selon lequel sont exécutées les étapes suivantes :

- détermination d'une valeur demandée (AL1) de puissance électrique de l'au moins un consommateur (V1) ;
- détermination d'une valeur maximale disponible (VLMAX1) de puissance électrique pour l'au moins un tronçon (S1) ;
- ouverture de l'au moins un tronçon (S1) pour l'au moins un consommateur (V1) pour la transmission d'une valeur autorisée (WF1) correspondant à la valeur de puissance demandée (AL1) si la valeur de puissance demandée (AL1) est inférieure ou égale à la valeur de puissance maximale disponible (VLMAX1).

**2.** Procédé selon la revendication 1, la valeur de puissance demandée (AL1) étant demandée comme puissance électrique ou intensité de courant ou quantité de courant.

**3.** Procédé selon la revendication 1 ou 2, la valeur de puissance demandée (AL1) se présentant sous la forme d'un profil de puissance (LP1) qui demande des valeurs de puissance variables dans le temps.

**4.** Procédé selon l'une des revendications précédentes, la valeur de puissance demandée (AL1) étant déterminée par une unité de réglage (R).

**5.** Procédé selon la revendication 4, une authentification (AUT) de l'au moins un consommateur (V1) étant exécutée par l'unité de réglage (R) pour déterminer la valeur de puissance demandée (AL1).

**6.** Procédé selon l'une des revendications précédentes, au moins deux tronçons (S1, S2) étant utilisés pour au moins deux consommateurs (V1, V2).

**7.** Procédé selon la revendication 6, l'au moins une valeur de puissance demandée (AL1) étant soustraite d'une valeur de puissance prédéfinissable (LMAX) du tronçon (S1, S2) pour déterminer la valeur de puissance maximale disponible (VLMAX1) par tronçon (S1, S2).

**8.** Procédé selon l'une des revendications précédentes, l'ouverture étant empêchée si la valeur de puissance demandée (AL1) de l'au moins un consommateur (V1) dépasse la valeur de puissance maximale disponible (VLMAX1).

**9.** Procédé selon l'une des revendications précédentes, l'ouverture étant effectuée de telle sorte qu'est délivrée une autorisation qui est codée en tant que jeton d'autorisation (T), et plus particulièrement en tant que certificat.

**10.** Procédé selon l'une des revendications précédentes, l'ouverture étant effectuée pour un laps de temps prédéfinissable.

**11.** Procédé selon l'une des revendications précédentes, une valeur (WL1) d'une puissance électrique soutirée par l'au moins un consommateur (V1) étant déterminée et l'au moins au consommateur recevant une information (H1) si la valeur (WL1) dépasse la valeur (WF1) qui lui est autorisée.

**12.** Procédé selon la revendication 11, l'information (H1) ayant lieu sous la forme d'une séparation de l'au moins un consommateur du réseau d'alimentation en énergie (NET).

**13.** Unité de réglage (R) pour la prévention d'une surcharge d'au moins un tronçon (S1), l'au moins un tronçon (S2) étant conçu pour transporter une puissance électrique dans un réseau d'alimentation en énergie (NET) pour au moins un consommateur (V1), comprenant :

- une première unité (M1) pour déterminer une valeur demandée (AL1) de puissance électrique de l'au moins un consommateur (V1) ;

- une deuxième unité (112) pour déterminer une valeur maximale disponible (VLMAX1) de puissance électrique pour l'au moins un tronçon (S1) ;
- une troisième unité (M3) pour ouvrir l'au moins un tronçon (S1) pour l'au moins un consommateur (V1) pour la transmission de la valeur de puissance demandée (AL1) si la valeur de puissance demandée (AL1) ne dépasse pas la valeur de puissance maximale disponible (VLMAX1).

14. Unité de réglage (R) selon la revendication 13, l'unité de réglage (R) comportant en outre au moins une quatrième unité (M4) destinée à être utilisée dans l'une des étapes de procédé selon les revendications 2 à 12.

FIG 1

## FIG 2

AL1, AL2,
AL3, WL1        M4, AUT

R

NET

V3

S3

V2        S2        S23        S123        N

H1        S1

V1        SA3
          SA2
SA1

## FIG 3

100

110

120

130